# EUROPÄISCHE PATENTSCHRIFT

(11) **EP 1 642 992 B1**
(45) Veröffentlichungstag und Bekanntmachung des Hinweises auf die Patenterteilung: **19.03.2008**
(21) Anmeldenummer: 05019189.9
(22) Anmeldetag: 03.09.2005
(51) Int. Cl.: C22C 38/18, C23C 8/26, F16C 21/00, F16C 33/30, F16C 33/62, F16C 33/64, B21D 53/10

(54) **Spanlos hergestelltes dünnwandiges rostfreies Lagerbauteil insbesondere Wälzlagerbauteil**
Non-machined thin walled rust-free bearing component, particularly rolling bearing component
Elément de palier inoxydable à paroi mince realisé sans usinage, en particulier elément de roulement

(30) Priorität: 02.10.2004 DE 102004048172
(43) Veröffentlichungstag der Anmeldung: 05.04.2006
(73) Patentinhaber: Schaeffler KG, 91074 Herzogenaurach (DE)
(72) Erfinder: Grell, Karl-Ludwig, 91086 Aurachtal (DE); Kruppa, Martin, 91074 Herzogenaurach (DE); Müller, Thomas, 91093 Hessdorf (DE); Häring, Wolfgang, 92318 Neumarkt (DE); Merklein, Casten, 90409 Nürnberg (DE)

(56) Entgegenhaltungen:
- DE-A1- 4 303 884
- DE-A1- 4 342 342
- DE-A1- 10 020 118
- DE-A1- 19 500 576
- US-B1- 6 592 684

## Beschreibung

### Bezeichnung der Erfindung

Spanlos hergestelltes dünnwandiges rostfreies Lagerbauteil, insbesondere Wälzlagerbauteil

### Gebiet der Erfindung

Die Erfindung betrifft ein spanlos hergestelltes dünnwandiges rostfreies Lagerbauteil, insbesondere ein Wälzlagerbauteil wie Lagerring, Hülse oder Büchse.

Ein solches Lagerbauteil ist aus der DE 10020118 A bekannt.

### Hintergrund der Erfindung

Solche Lagerbauteile, die beispielsweise in Nadellagern oder dergleichen Einsatz finden, werden üblicherweise aus einem Kaltband tiefgezogen, wobei Voraussetzung für die Anwendung eines Tiefziehprozesses ist, dass ein wanddickengleicher Innen- und Außendurchmesser mit entsprechend geringer Aufrauung der Laufbahnen, die nicht weiter mechanisch nachbearbeitet werden, erreicht wird. Hierfür wird eine gleichmäßige, isotrope Umformfähigkeit des Kaltbandes gefordert. Im Stand der Technik wird hierfür beispielsweise ein Kaltband aus tiefziehfähigem Stahl mit etwa 0,10 % Kohlenstoff sowie Mangan, Chrom und Nickel verwendet. Typische Stähle sind hierbei DC04 modifiziert, C15 modifiziert, SAE1012 oder SAE1015, aber auch Einsatzstähle wie 16MnCr5 und 17Cr3. Das gezogene Bauteil wird anschließend einsatzgehärtet, um die gewünschte Verschleißfestigkeit und Tragfähigkeit zu erreichen. Nachdem es sich bei dem tiefziehfähigem Kaltband um einen korrosiven Stahl handelt, ist es noch erforderlich, eine Korrosionsschutzbeschichtung aufzubringen.

Solche Lagerbauteile kommen sehr häufig auch in Umgebungen zum Einsatz, wo sie auf lange Sicht einem korrosiven Angriff ausgesetzt sind. Als Beispiel ist der Automobilsektor zu nennen, wo solche Lagerbauteile unterschiedlichsten Witterungsbedingungen ausgesetzt sind. Die Lagerbauteile können dabei in verschiedenster Anwendung zum Einsatz, als bekanntes Wälzlager oder beispielsweise in Form von Gelenkkreuzbüchsen oder dergleichen. Insbesondere auf dem in Rede stehenden Automobilsektor steigen aber die Anforderungen an die Korrosionsbeständigkeit der verbauten Elemente kontinuierlich. So kommen feuerverzinkte Karosseriebauteile oder Aluminiumbauteile zum Einsatz, die auf viele Jahre korrosionsgeschützt beziehungsweise von Haus aus nicht korrosiv sind. Diesen gestiegenen Anforderungen können Lagerbauteile, wie sie im Stand der Technik hergestellt werden, nicht immer folgen, da die Korrosionsschutzbeschichtung nicht ausreicht, die auf mehrere Jahre ausgelegten Anforderungen zu erfüllen. Vor allem bei Bauteilen, die unmittelbar den aggressiven Medien ausgesetzt sind, wie beispielsweise im Bereich freiliegender Kardanverbindungen oder dergleichen, kann es folglich zur Korrosion kommen.

### Zusammenfassung der Erfindung

Der Erfindung liegt damit das Problem zugrunde, ein Lagerbauteil anzugeben, das in solchen Fällen eingesetzt werden kann und die Anforderungen an die Korrosionsbeständigkeit erfüllt.

Zur Lösung dieses Problems ist ein Lagerbauteil vorgesehen, das aus einem Kaltband mit einem Kohlenstoff-Gehalt von 0,15 - 0,25 % und einem Legierungsanteil an Chrom von mindestens 12 % tiefgezogen ist, und das ein zumindest randseitig mit gelöstem Stickstoff angereichertes Martensitgefüge aufweist.

Das erfindungsgemäße Lagerbauteil wird vorteilhaft aus einem Kaltband hergestellt, das tiefziehfähig ist, gleichzeitig aber auch weitgehend korrosionsresistent ist. Es hat sich herausgestellt, dass ein Kaltband mit einem Kohlenstoffgehalt von 0,15 ― 0,25 % und einem hohen Legierungsanteil an Chrom von mindestens 12 % diese Voraussetzung erfüllt. Es ist zum einen tiefziehfähig, weist also eine hohe Umformfähigkeit und eine niedrige Streckgrenze von maximal ca. 320 MPa auf, sowie eine hohe Bruchdehnung von mindestens 25 % bei einer maximalen Zugfestigkeit von 565 N/mm². Darüber hinaus weist der Werkstoff neben guten mechanischen Eigenschaften auch ein quasi isotropes Verhalten bei der Kaltumformung auf. Diese isotropen Eigenschaften ermöglichen es, dünnwandige Bauteile mit einer Wandstärke zwischen 0,5 und 2,5 mm zu ziehen und gleichzeitig eine homogene Wanddicke über den Umfang mit minimaler Zipfligkeit zu erhalten. Der hohe Chromanteil führt dazu, dass das Kaltband nur eine sehr geringe Neigung zur Korrosion zeigt. Bei dem erfindungsgemäßen Kaltbandstahl sollte es sich um einen CrMo- oder CrMnMo-Stahl handeln, wobei der Kohlenstoffgehalt im angegebenen Bereich liegt.

Entscheidend für dieses Eigenschaftsprofil des verwendeten Kaltbands ist eine definierte Walz- und Glühfolge bei der Kaltbandherstellung ausgehend vom Warmband. Üblicherweise wird hierfür im Stahlwerk der Werkstoff im Elektrolichtbogenofen erschmolzen, anschließend sekundär-metallurgisch in einem Konverter fertigbehandelt und auf einer Stranggussanlage vergossen. Die so erzeugten Brammen werden dann warmgewalzt, gebeizt und gespalten. Am Beginn der Kaltbandfertigung erfolgt eine Rekristallisationsführung des Warmbands in einem Haubenofen. Nach Strahlen und Beizen wird entsprechend der angestrebten Banddicke kaltgewalzt. Vor dem abschließenden Dressieren zur Einstellung der Enddicke erfolgt eine weitere Rekristallisationsglühung. Die so erzielbaren Korngrößen von ca. 8µm und gröber nach ASTM begünstigen die gute Umformfähigkeit. Zwar steht dies im Wiederspruch zur allgemein üblichen Forderung der Lagerindustrie nach Feinkornstählen. In Kombination mit den sich bildenden Chromkarbiden ist aber eine Beherrschung der Korngröße möglich, da die Karbide thermisch stabil sind und bei der Wärmebehandlung feinkornstabilisierend wirken. Aufgrund der isotopischen Eigenschaften lassen sich im Tiefziehverfahren sehr homogene dünnwandige Präzisionsbauteile herstellen. Die im Stand der Technik beim Tiefziehen häufig beobachtete Orangenhautbildung, die zu einer Verschlechterung der Laufwandqualität führt, wird aufgrund der beschriebenen Korngrößenbeeinflussung durch Karbide trotz größeren Ferritkorns kompensiert und vermieden.

Wenngleich die Verwendung dieses hochlegierten Stahls die Herstellung eines beachtlich korrosionsresistenten Bauteils durch Präzisionstiefziehen ermöglicht, erfüllt das Lagerbauteil die Anforderungen an die Tragfähigkeit noch nicht. Im Vergleich zu den im Stand der Technik verwendeten zwar tiefziehfähigen, jedoch nicht korrosionsfesten Stählen ist das verwendete Kaltband deutlich weicher. Im Hinblick auf die wirkenden Kräfte im Betrieb werden aber an die mechanisch beanspruchten Oberflächen hohe Anforderungen hinsichtlich der Tragfähigkeit gestellt. Infolgedessen ist es erforderlich, das tiefgezogene Bauteil zu härten.

Hierfür ist erfindungsgemäß vorgesehen, das Lagerbauteil aufzusticken. Hierzu werden in einem physikalisch-thermochemischen Härteprozess Stickstoffatome dem bei der dabei herrschenden Temperatur sich im austenitischen Zustand befindlichen Stahl zugeführt. Der Stickstoff wird im Austenitgefüge eingelagert und bleibt in gelöster Form auch im Martensitgefüge vorhanden. Der Wärmebehandlungsprozess wird so gesteuert, dass eine hohe beziehungsweise maximale Stickstofflöslichkeit im Stahl gegeben ist, jedoch durch Kontrolle durch Atmosphäre und insbesondere der Abkühlbedingungen ein Ausscheiden von versprödenden Nitriden, insbesondere an den Korngrenzen, vermieden wird. Aufgrund des Atomradius von Stickstoff ist eine bestimmte Diffusionsgeschwindigkeit vorgegeben, mit der der Stickstoff in den Stahl eindiffundiert. Nach dem Abkühlen entsteht ein sogenannter Stickstoffmartensit.

Das Einbringen des Stickstoffs in gelöster Form hat zum einen den Vorteil, dass hierdurch eine Oberflächenhärtung möglich ist und Werte von wenigstens 58 HRC beziehungsweise 650 HV erreicht werden. Diese Oberflächenhärte ist mehr als ausreichend im Hinblick auf die geforderten mechanischen Eigenschaften. Der eingebrachte Stickstoff verbessert aber auch die Korrosionsbeständigkeit des Lagerbauteils noch weiter, als sie bereits durch den hohen Chrom-Legierungsanteil erreicht wird. Es lässt sich eine Korrosionsbeständigkeit von wenigstens 96 h im Salzsprühnebeltest nach ASTM B117 erreichen.

Der Stickstoffgehalt in der Randzone sollte 0,05 - 1,5 %, insbesondere 0,1 - 0,5 % betragen. Ein zu hoher Stickstoffgehalt führt infolge von Nitridausscheidungen zu einer Versprödung des Materials, was nicht gewünscht ist. Infolgedessen ist es erforderlich, die Menge des Stickstoffs im Hinblick auf die maximale Stickstofflöslichkeit zu kontrollieren, um den Grenzwert, ab dem eine Nitritausscheidung erfolgt, zu unterschreiten.

Die Tiefe der Randzone sollte wenigstens 0,05 mm insbesondere wenigstens 0,1 mm, vorzugsweise wenigstens 0,2 mm sein, wobei es ausreichend ist, sie auf maximal 0,5 mm zu begrenzen. Bei dünnwandigen Bauteilen von beispielsweise einer Wanddicke bis zu ca. 1 mm ist es bei größeren Randzonentiefen möglich, den Stickstoff über den gesamten Querschnitt hinreichend anzureichern, nachdem die Stickstoffdiffusion von beiden Seiten her erfolgt. Der Grad, bis zu welchem der Stickstoff eindiffundiert, hängt natürlich von den Bedingungen im Rahmen der Wärmebehandlung ab, insbesondere der Temperatur, dem Stickstoffdruck wie natürlich auch der Nitrierungsdauer. Bei dickeren Bauteilen liegt im Kern ausschließlich gelöster Kohlenstoff vor, während sich im Randbereich eine stickstoffreiche martensitische Randzone mit Anteilen von gelöstem Kohlenstoff ergibt. Da aufgrund dieser Bedingungen auch die kritischen Abschreckgeschwindigkeiten dilatometrisch unterschiedlich sind, ergeben sich daraus Druckeigenspannungen in der Randzone, die günstig für die Bauteileigenschaften sind.

Im Hinblick auf eine möglichst hohe Stickstofflöslichkeit im Austenit ist es zweckmäßig, wenn das Kaltband nickelfrei ist. Das Fehlen des Nickels ist auch dahingehend vorteilhaft, als eine Anwendung des Lagerbauteils auch im Lebensmittelumfeld möglich ist. Die dort erforderliche hohe Beständigkeit gegen Wasser und Reinigungsmittel ist mit dem erfindungsgemäßen Bauteil gegeben. Sofern möglich, sollte auch kein Silizium vorliegen, da dieses die Stickstofflöslichkeit verringert. Auch ein zu hoher Kohlenstoffgehalt ist diesbezüglich nachteilig. Ferner sollten die Anteile an Vanadium, Niob und Titan relativ gering sein, da diese Elemente die Gefahr von Ausscheidungen von Korngrenzennitriden erhöhen, die zu einer Versprödung führen.

Wie beschrieben sollte die Bauteilhärte an der stickstoffreichen Bauteilseite wenigstens 58 HRC entsprechend 650 HV betragen. Die Warmfestigkeit kann bei Verwendung des erfindungsgemäßen Kaltbands in Verbindung mit der Aufstickung ebenfalls sehr hoch eingestellt werden, sie beträgt mindestens 300°C. Der Chromgehalt in Verbindung mit dem eindiffundierten Stickstoffgehalt, dessen Maximalgehalt bis zur Löslichkeitsgrenze materialabhängig ist, sollte ferner so gewählt werden, dass das Bauteil eine Korrosionsbeständigkeit von wenigstens 96 h im Sprühnebeltest zeigt.

Neben dem Lagerbauteil betrifft die Erfindung ferner ein Verfahren zur Herstellung eines solchen Bauteils, bei dem ein austenitisches Kaltband mit einem Kohlenstoff-Gehalt von 0,15 - 0,25 % und einem Legierungsanteil an Chrom von mindestens 12 % verwendet wird, aus dem das Bauteil zunächst tiefgezogen und anschließend im Rahmen einer Temperaturbehandlung zumindest randseitig in einer stickstoffreichen Atmosphäre mit Stickstoff angereichert wird, wonach das Bauteil zur Bildung eines Martensitgefüges, in dem der Stickstoff gelöst vorliegt, gekühlt wird.

Die Stickstoffanreicherung selbst sollte bei einer Temperatur von 1000 - 1200°C durchgeführt werden. Die Dauer der Temperaturbehandlung richtet sich nach dem Grad der Aufstickung, sie kann mindestens 15 min bis zu mehreren Stunden betragen. Sie ist des Weiteren abhängig vom verwendeten Ausgangsstahl, nachdem von dessen Zusammensetzung die maximale Stickstofflöslichkeit abhängt. Der Stickstoffdruck während der Behandlung sollte 0,1 - 3 bar betragen.

Als weiterhin positiv wurde festgestellt, dass der hohe Legierungsanteil eine langsame Abkühlung ermöglicht, wobei Abkühlraten ≤ 50°C/s möglich sind.

Dies wirkt sich sehr günstig auf die Form- und Maßhaltigkeit der Bauteile aus. Es ist also ein schroffes Abschrecken nicht nötig, was beim Stand der Technik mitunter zu Maß- und Formänderungen führt.

Weiterhin ist es zweckmäßig, nach der Abkühlung eine Tieftemperaturbehandlung anzuschließen, um die Martensitbildung weiterzuführen. Daneben kann nach dem Anlassen oder nach einer gegebenenfalls durchgeführten Tieftemperaturbehandlung eine weitere Temperaturbehandlung zum Anlassen des Gefüges durchgeführt werden.

### Kurze Beschreibung der Zeichnungen

Weiter Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: einen Längsschnitt durch ein erfindungsgemäßes Lagerbauteil in Form einer Gelenkkreuzbüchse,
- Fig. 2: den Härteverlauf, aufgetragen über den Bauteilquerschnitt, und
- Fig. 3: ein Diagramm zur Darstellung des Kohlenstoff-, Stickstoff- und Chromgehalts im Randbereich.

### Detaillierte Beschreibung der Zeichnungen

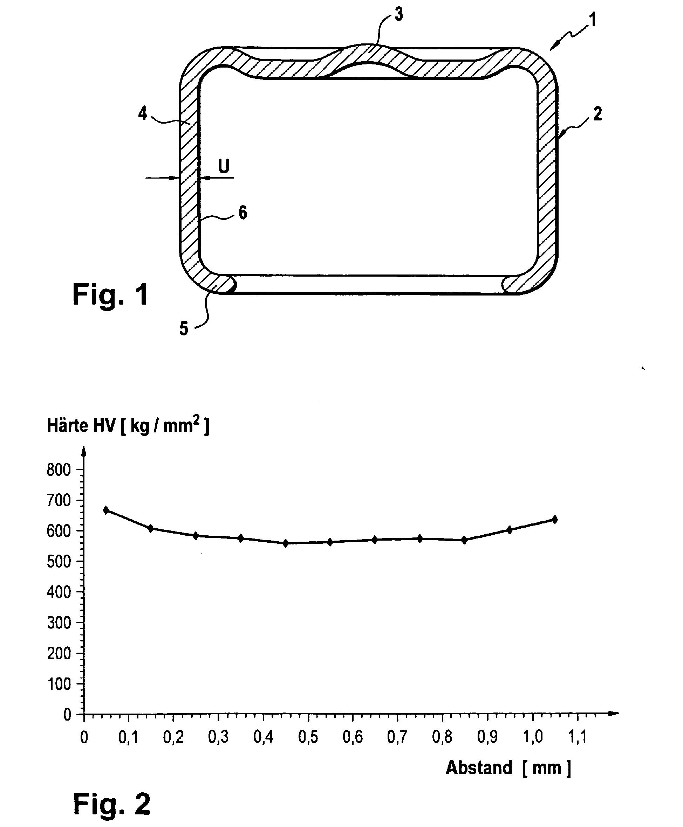

Fig. 1 zeigt eine Schnittansicht durch ein erfindungsgemäßes Lagerbauteil 1 in Form einer Gelenkkreuzbüchse 2. Es handelt sich um ein rotationssymmetrisches Bauteil, bestehend aus einem Büchsenboden 3, der Büchsenwand 4 und der Bördelung 5. Die Gelenkkreuzbüchse wird zunächst aus einem Kaltband tiefgezogen, wobei der Bördelrand 5 noch nicht vorgesehen ist. Das heißt, die Zylinderwand 4 erstreckt sich geradlinig. Nach dem Einbringen von Nadellagerkörpern wird der freie Rand zur Bildung des Bördelrandes umgebogen, worüber dann die Nadeln gehalten werden.

Die Gelenkkreuzbüchse 2 wird aus einem Kaltband gezogen, das einen Kohlenstoff-Gehalt von 0,15 - 0,25 % mit einem Legierungsanteil an Chrom von mindestens 12 % aufweist. Verwendbare bekannte Kaltbänder, die diese Gehalte aufweisen, und ein isotropes Umformverhalten, das eine homogene Wanddicke am gezogenen Bauteil gewährleistet, zeigen, sind beispielsweise X20Cr13 oder X22Cr13. Bei beiden handelt es sich um hochlegierte Stähle mit einem Chrom-Gehalt von rund 13 % und einem Kohlenstoff-Gehalt von 0,20 % beim Kaltband X20Cr13 beziehungsweise 0,22 % beim Kaltband X22Cr13.

Um die Oberflächen der Gelenkkreuzbüchse 2 zu härten, um die geforderte Tragfähigkeit insbesondere im Bereich der Büchseninnenwand 6 zu erreichen, die für den Einsatz und den dabei herrschenden mechanischen Beanspruchungen verlangt wird, wird im Rahmen der -Herstellung nach dem Tiefziehen eine Temperaturbehandlung durchgeführt, im Rahmen welcher in die Oberflächen Stickstoff eingetragen wird. Hierzu wird das Bauteil auf eine Temperatur zwischen 1000°C und 1200°C in einer stickstoffreichen Atmosphäre erhitzt und auf dieser Temperatur für eine bestimmte Zeit gehalten. Der anwesende Stickstoff diffundiert in das Austenitgefüge, wobei die Diffusionstiefe abhängig von dem herrschendem Stickstoffdruck, der Dauer der Temperaturbehandlung und dem verwendetet Kaltbandmaterial ist. Nach Beendigung dieses Diffusionsschrittes erfolgt eine Abkühlung, um Martensit zu bilden, in dem der Stickstoff gelöst vorliegt. Das heißt, die eingebrachte Stickstoffmenge ist im Hinblick auf die materialabhängige maximale Stickstofflöslichkeit so zu wählen und letztlich sind die Parameter während der Diffusionsbehandlung so einzustellen, dass keine Nitridausscheidung einsetzt, die versprödend wirkt.

Nach dem Abkühlen, das relativ langsam mit einer Abkühlgeschwindigkeit von mehreren 10°C/s erfolgen kann, kann sich zur Fortführung und Intensivierung der Martensit-Bildung eine Tieftemperaturbehandlung anschließen, im Rahmen welcher die Gelenkkreuzbüchse 2 auf Temperaturen bis unter -50°C, beispielsweise ―80°C abgekühlt wird. Diesem Abkühlen folgt ein Anlassschritt zum Spannungsabbau, bei dem das Bauteil beispielsweise bis 100°C oder 150°C erwärmt wird.

Die hohe Chromlegierung in Verbindung mit dem gelösten Stickstoff führt zu einer hervorragenden Korrosionsbeständigkeit des erhaltenen Bauteils, wobei die Zusammensetzung des Ausgangsmaterials des Kaltbandes gleichwohl so gewählt ist, dass es sehr gut und maßhaltig tiefziehbar ist und die Maßhaltigkeit auch im Rahmen der nachfolgenden Aufstickung beibehalten wird.

Fig. 2 zeigt den Härteverlauf über den Querschnitt einer erfindungsgemäß aus X22Cr13 hergestellten Gelenkkreuzbüchse 2. Die Gelenkkreuzbüchse 2 der Art, wie sie in Fig. 1 gezeigt ist, wies im Untersuchungsbereich, der im Wesentlichen mittig am Büchsenzylinder 4 liegt und in Fig. 1 mit U gekennzeichnet ist, eine Breite von 1,1 mm auf. Die untersuchte Gelenkkreuzbüchse wurde in einer dreistufigen Vorwärmung im Vakuum auf 300°C, dann 600°C und anschließend 850°C erwärmt und jeweils bis zum Temperaturausgleich gehalten. Anschließend wurde auf die Aufstickungstemperatur von 1050°C erwärmt und die Aufstickung bei einem Stickstoffdruck von 1000 mbar für 60 Minuten durchgeführt. Am Ende der Aufstickung erfolgte eine Abkühlung im Gasstrom bei Stickstoffüberdruck von 10 bar. Dem schloss sich ein Tiefkühlschritt an, in dem die Gelenkkreuzbüchse auf ―80°C gekühlt wurde, wonach ein Anlassen bei 150°C erfolgte.

Der Härteverlauf über den Querschnitt ergibt sich aus Fig. 2. Die einzelnen Messpunkte sind jeweils 0,1 mm voneinander beabstandet, wobei der erste Messpunkt bei 0,05 mm liegt.

Es ergaben sich folgende Härtewerte:

| Punkt | Abstand | Härtewert |
|---|---|---|
| 1 | 0,050 | 669 HV |
| 2 | 0,150 | 612 HV |
| 3 | 0,250 | 589 HV |
| 4 | 0,350 | 578 HV |
| 5 | 0,450 | 564 HV |
| 6 | 0,550 | 567 HV |
| 7 | 0,650 | 575 HV |
| 8 | 0,750 | 583 HV |
| 9 | 0,850 | 580 HV |
| 10 | 0,950 | 611 HV |
| 11 | 1,050 | 645 HV |

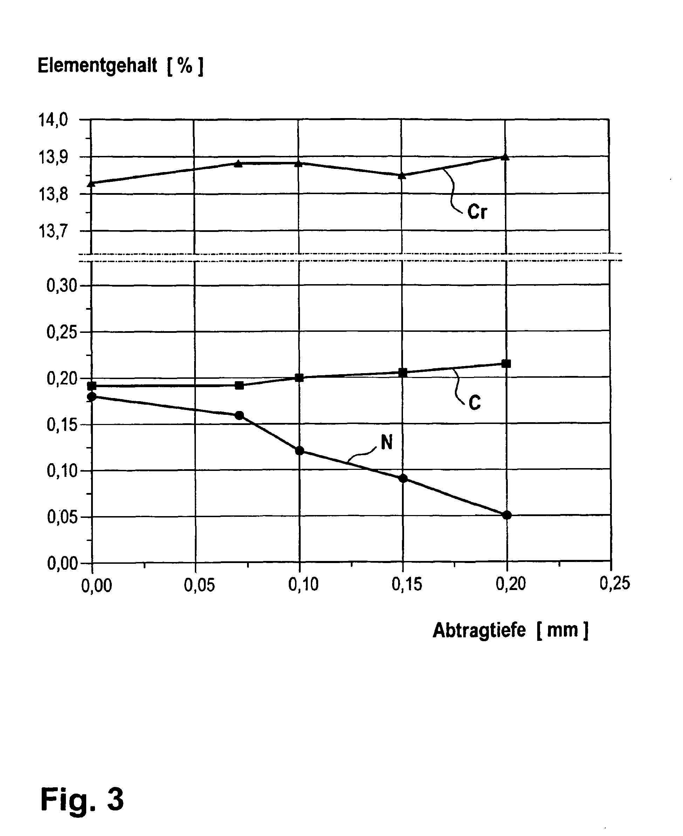

Ersichtlich zeigt sich, dass aufgrund des Aufstickens an den beiden Randbereichen stickstoffreicher Martensit vorliegt, der deutlich härter ist als der Martensit im Kern. Die Kurve wie auch die obenstehende Tabelle zeigen eine deutliche Härteabnahme, je weiter die Messpunkte zur Mitte liegen, wobei sich die Kurve zur Mitte hin auch deutlich abflacht. Dieser Härteverlauf korreliert mit der Stickstoff- und Kohlenstoffverteilung im Randbereich. Hierzu zeigt Fig. 3 ein Diagramm, das den Stickstoff-, Kohlenstoff- und Chrom-Gehalt im Randbereich zeigt. Gemessen wurden die jeweiligen Gehalte in unterschiedlichen Abtragtiefen. Der Stickstoffverlauf wird durch die Kurve N dargestellt. Ersichtlich liegt der Stickstoffverlauf an der Oberfläche bei ca. 0,18 %, er nimmt mit zunehmender Attraktive entsprechend den üblichen Diffusionsgrundsätzen ab. In einer Tiefe von 0,2 mm betrug der Stickstoffgehalt noch ca. 0,05 %.

Die Kurve C gibt den Kohlenstoffgehalt an. Dieser zeigt im Randbereich einen leichten Anstieg, was darauf zurückzuführen ist, dass aufgrund des eindiffundierten Stickstoffs partiell der Kohlenstoff in die Tiefe gedrängt wird, so dierten Stickstoffs partiell der Kohlenstoff in die Tiefe gedrängt wird, so dass sich eine Art "Bugwelle" ergibt, die randnah zu etwas höheren Kohlenstoffgehalten führt. Im Randbereich liegt also gelöster Kohlenstoff und Stickstoff vor, während mit zunehmender Kerntiefe der Stickstoffgehalt abnimmt und im Kern lediglich Kohlenstoff in gelöster Form vorliegt.

Die mit Cr gekennzeichnete Kurve zeigt des Weiteren den Chrom-Gehalt. Ersichtlich liegt dieser im untersuchten Randbereich im Wesentlichen unbeeinflusst oberhalb von 13,8 %. Aufgrund dieses unbeeinflussten Cr-Gehaltes und des gefügemäßigen Fehlens von Karbid- und Nitridausscheidungen aufgrund der gegebenen Kohlenstoff- und Stickstoffgehalte ist eine hervorragende Korrosionsbeständigkeit, soweit diese auf das Legierungselement Chrom zurückzuführen ist, in Verbindung mit dem Stickstoff gegeben. Die Korrosionsbeständigkeit liegt deutlich über 96 Stunden im Salzsprühnebeltest.

### Bezugszahlen

- 1: Lagerbauteil
- 2: Gelenkkreuzbüchse
- 3: Büchsenboden
- 4: Büchsenwand
- 5: Bördelung
- 6: Büchseninnenwand

## Patentansprüche

1. Spanlos hergestelltes dünnwandiges rostfreies Lagerbauteil (1), insbesondere Wälzlagerbauteil wie Lagerring, Hülse oder Büchse, das aus einem Kaltband mit einem Kohlenstoff-Gehalt von 0,15 - 0,25 % und einem Legierungsanteil an Chrom von mindestens 12 % tiefgezogen ist, und ein zumindest randseitig mit gelöstem Stickstoff angereichertes Martensitgefüge aufweist.

2. Lagerbauteil nach Anspruch 1, **dadurch gekennzeichnet, dass** der Stickstoffgehalt am Rand 0,05 - 1,5 %, insbesondere 0,1 - 0,5 % beträgt.

3. Lagerbauteil nach Anspruch 1 oder 2, **dadurch gekennzeichnet, dass** die stickstoffreiche Randzone wenigstens 0,05 mm, insbesondere wenigstens 0,1 mm, vorzugsweise wenigstens 0,2 mm tief ist.

4. Lagerbauteil nach Anspruch 3, **dadurch gekennzeichnet, dass** die Randzone maximal 0,5 mm, insbesondere maximal 0,4 mm tief ist.

5. Lagerbauteil nach einem der vorangehenden Ansprüche, **dadurch gekennzeichnet, dass** das Kaltband nickelfrei ist.

6. Lagerbauteil nach einem der vorangehenden Ansprüche, **dadurch gekennzeichnet, dass** die Bauteilhärte an der stickstoffreichen Bauteilseite wenigstens 58 HRC beträgt.

7. Lagerbauteil nach einem der vorangehenden Ansprüche, **dadurch gekennzeichnet, dass** die Korrosionsbeständigkeit wenigstens 96 h im Salzsprühnebeltest nach ASTM B117 beträgt.

8. Verfahren zur Herstellung eines Bauteils nach einem der Ansprüche 1 bis 7, bei dem ein austenitisches Kaltband mit einem Kohlenstoff-Gehalt von 0,15 - 0,25 % und einem Legierungsanteil an Chrom von mindestens 12 % verwendet wird, aus dem das Bauteil zunächst tiefgezogen und anschließend im Rahmen einer Temperaturbehandlung zumindest randseitig in einer stickstoffreichen Atmosphäre mit Stickstoff angereichert wird, wonach das Bauteil zur Bildung eines Martensitgefüges, in dem der Stickstoff gelöst vorliegt, gekühlt wird.

9. Verfahren nach Anspruch 8, **dadurch gekennzeichnet, dass** die Stickstoffanreicherung bei einer Temperatur von 1000 - 1200 °C durchgeführt wird.

10. Verfahren nach Anspruch 8 oder 9, **dadurch gekennzeichnet, dass** der bei der Stickstoffbehandlung herrschende Druck 0,1-3 bar beträgt.

11. Verfahren nach einem der Ansprüche 8 bis 10, **dadurch gekennzeichnet, dass** die Abkühlung mit einer Kühlgeschwindigkeit ≤ 50°C/s erfolgt.

12. Verfahren nach einem der Ansprüche 8 bis 11, **dadurch gekennzeichnet, dass** nach der Abkühlung eine Tieftemperaturbehandlung zur weiteren Martensitbildung erfolgt.

13. Verfahren nach einem der Ansprüche 8 bis 12, **dadurch gekennzeichnet, dass** nach der Abkühlung, gegebenenfalls nach der Tieftemperaturbehandlung eine Temperaturbehandlung zum Anlassen des Gefüges erfolgt.

## Claims

1. Thin-walled stainless bearing component (1), in particular rolling bearing component, such as bearing ring, sleeve or bush, which is produced without material-removing machining by being deep-drawn from a cold-rolled strip with a carbon content of 0.15 - 0.25% and a chromium alloying content of at least 12%, and has a martensitic microstructure which is enriched with dissolved nitrogen at least at the edge sides.

2. Bearing component according to Claim 1, **characterized in that** the nitrogen content at the edge is 0.05 - 1.5%, in particular 0.1 - 0.5%.

3. Bearing component according to Claim 1 or 2, **characterized in that** the nitrogen-rich edge zone is at least 0.05 mm, in particular at least 0.1 mm, preferably at least 0.2 mm deep.

4. Bearing component according to Claim 3, **characterized in that** the edge zone is at most 0.5 mm, in particular at most 0.4 mm, deep.

5. Bearing component according to one of the preceding claims, **characterized in that** the cold-rolled strip is nickel-free.

6. Bearing component according to one of the preceding claims, **characterized in that** the component hardness on the nitrogen-rich component side is at least 58 HRC.

7. Bearing component according to one of the preceding claims, **characterized in that** the corrosion resistance is at least 96 h in the salt spray test in accordance with ASTM B117.

8. Process for producing the component according to one of Claims 1 to 7, in which an austenitic cold-rolled strip with a carbon content of 0.15 - 0.25% and a chromium alloying content of at least 12% is used, the component is initially deep-drawn from this strip and is then enriched with nitrogen at the edge sides as part of a heat treatment in a nitrogen-rich atmosphere, after which the component is cooled in order to form a martensitic microstructure in which the nitrogen is present in dissolved form.

9. Process according to Claim 8, **characterized in that** the nitrogen enrichment is carried out at a temperature of 1000 - 1200°C.

10. Process according to Claim 8 or 9, **characterized in that** the pressure which prevails during the nitrogen treatment is 0.1 - 3 bar.

11. Process according to one of Claims 8 to 10, **characterized in that** the cooling is carried out at a cooling rate of ≤ 50°C/s.

12. Process according to one of Claims 8 to 11, **characterized in that** after cooling a low-temperature treatment is carried out to form further martensite.

13. Process according to one of Claims 8 to 12, **characterized in that** a heat treatment for tempering the microstructure is carried out after the cooling, if appropriate after the low-temperature treatment.

## Revendications

1. Composant inoxydable (1) pour palier, à paroi mince, réalisé par un procédé sans enlèvement de matière, en particulier composant de palier de roulement, par exemple bague de roulement, manchon ou douille, réalisé par emboutissage profond d'un feuillard à froid dont la teneur en carbone est comprise entre 0,15 et 0,25 % et la teneur d'alliage avec le chrome est d'au moins 12 %, qui présente au moins sur son bord un réseau de martensite enrichi en azote dissous.

2. Composant de palier selon la revendication 1, **caractérisé en ce que** la teneur en azote du bord est comprise entre 0,05 et 1,5 % et en particulier entre 0,1 et 0,5 %.

3. Composant de palier selon les revendications 1 ou 2, **caractérisé en ce que** la zone de bord riche en azote a une profondeur d'au moins 0,05 mm, en particulier d'au moins 0,1 mm et de préférence d'au moins 0,2 mm.

4. Composant de palier selon la revendication 3, **caractérisé en ce que** la zone de bord a une profondeur maximale de 0,5 mm et en particulier une profondeur de 0,4 mm.

5. Composant de palier selon l'une des revendications précédentes, **caractérisé en ce que** le feuillard à froid est exempt de nickel.

6. Composant de palier selon l'une des revendications précédentes, **caractérisé en ce que** la dureté du composant sur son côté enrichi en azote est d'au moins 58 HRC.

7. Composant de palier selon l'une des revendications précédentes, **caractérisé en ce que** la résistance à la corrosion est d'au moins 96 h dans le test sous pulvérisation saline selon ASTM B117.

8. Procédé de fabrication d'un composant selon l'une des revendications 1 à 7, dans lequel on utilise un feuillard à froid austénitique dont la teneur en carbone est comprise entre 0,15 et 0,25 % et la teneur d'alliage avec le chrome est d'au moins 12 % et dans lequel le composant est d'abord embouti et ensuite enrichi en azote au moins sur son bord dans une atmosphère riche en azote au cours d'un traitement thermique, suite à quoi le composant est refroidi pour former un réseau martensitique dans lequel l'azote se présente sous forme dissoute.

9. Procédé selon la revendication 8, **caractérisé en ce que** l'enrichissement en azote est réalisé à une température de 1 000 à 1 200 °C.

10. Procédé selon les revendications 8 ou 9, **caractérisé en ce que** la pression qui règne pendant le traitement à l'azote est comprise entre 0,1 et 3 bars.

11. Procédé selon l'une des revendications 8 à 10, **caractérisé en ce que** le refroidissement s'effectue à une vitesse de refroidissement ≤ 50 °C/s.

12. Procédé selon l'une des revendications 8 à 11, **caractérisé en ce qu'**après le refroidissement, on réalise un traitement à basse température pour poursuivre la formation de martensite.

13. Procédé selon l'une des revendications 8 à 12, **caractérisé en ce qu'**après le refroidissement et éventuellement après le traitement à basse température, on réalise un traitement thermique de revenu du réseau.
